# EUROPEAN PATENT APPLICATION

(11) **EP 3 624 427 A1**
(43) Date of publication of application: **18.03.2020**
(21) Application number: 18918108.4
(22) Date of filing: 12.07.2018
(51) Int. Cl.: H04L 29/12

(54) **DOMAIN NAME ACQUISITION METHOD, WEBSITE ACCESS METHOD AND SERVER**

(30) Priority: 09.05.2018 CN 201810438966
(71) Applicant: Wangsu Science & Technology Co., Ltd., Shanghai 200030 (CN)
(72) Inventor: LIN, Peng, Shanghai 200030 (CN); CHEN, Guopeng, Shanghai 200030 (CN)
(74) Representative: Hanna Moore + Curley
(86) International application number: PCT/CN2018/095435
(87) International publication number: WO 2019/214054

(57) **Abstract**

The embodiments of the present disclosure relate to the field of Internet technologies, and disclose a domain-name acquisition method, a website access method, and a server. In the embodiment of the present disclosure, the domain-name acquisition method includes the server receiving network request information of an https protocol of the client terminal, obtaining the digital authentication information of the client terminal based on the network request information, parsing a preset field in the digital authentication information and obtaining a domain name. The embodiments of the disclosure also provide a website access method and a server. With the embodiments of the present disclosure, the server may obtain the domain name requested by the network request information of https, and ensure normal operation of the traffic guidance mechanism in the existing technologies.

## Description

### TECHNICAL FIELD

Embodiments of the present disclosure relate to the field of Internet technologies and, in particular, to a domain-name acquisition method, a website access method, and a server.

### BACKGROUND

With the rapid development of computers and the Internet, user registration, user login, online survey, purchase order management, etc. have become the basic functions of most websites. Such functions have commonalities. For example, these functions have good interactivity, need to be back to source, and belong to dynamic content. In the website, dynamic content is widely used, such as forums, online banking, and email, etc. The real-time back-to-source feature of dynamic content increases the difficulty of caching. With the continuous popularization of dynamic content, more and more resources may only be directly back to source through a line, which increases the input of bandwidth cost and brings huge challenge to network operators. Therefore, under the premise of improving user perception, the optimization of bandwidth cost has become the focus of network operators, and proxy servers have emerged.

However, the inventors of the present application have found that existing technologies have at least the following drawbacks.

In the existing technologies, a website with a hyper text transfer protocol (http) protocol is less secure, and the scenarios of non-site information such as hijacking of the page and insertion of advertisements are gradually increasing, which seriously affects the user's online experience. Thus, more and more websites enable a hyper text transfer protocol secure (https) encryption protocol. However, an https protocol packet has an encryption feature, and a proxy server may not obtain the domain name requested by the https protocol packet by a method of obtaining the domain name requested by the packet of http protocol. Therefore, the proxy server may not perform traffic management directly through a domain name requested by a client terminal, and the traffic guidance mechanism in the existing technologies is completely out of order.

### SUMMARY

The object of embodiments of the present disclosure is to provide a domain-name acquisition method, a website access method, and a server, so that the server may obtain the domain name requested by the https packet and ensure the normal operation of the traffic guidance mechanism in the existing technologies.

To solve the above technical problem, some embodiments of the present disclosure provide a domain-name acquisition method, including a server receiving network request information of the https protocol of a client terminal, obtaining digital authentication information of the client terminal based on network request information, and parsing a preset field in the digital authentication information to obtain a domain name.

Some embodiments of the present disclosure further provide a website access method, applied to a server, and the method includes:
receiving network request information of a client terminal; detecting whether the network request information is network request information of an https protocol; if the network request information is the network request information of the https protocol, obtaining a domain name requested by the client terminal according to a domain-name acquisition method; if the domain name requested by the client terminal is a preset domain name, obtaining a line configuration condition corresponding to the preset domain name; configuring a back-to-source line according to the line configuration condition and obtaining responding signal corresponding to the network request information through the back-to-source line; and feeding back the responding signal to the client terminal.

Some embodiments of the present disclosure further provide a server, including: at least one processor; and
a memory communicatively coupled to the at least one processor; where
the memory stores instructions executable by the at least one processor, and the instructions may be executed by the at least one processor to enable the at least one processor to perform the domain-name acquisition method described above.

Embodiments of the present disclosure also provide a computer readable storage medium storing a computer program, which may implement the above-described domain-name acquisition method when executed by a processor.

Compared with the existing technologies, when receiving the network request information from the https protocol of the client terminal, the server may obtain the digital authentication information of the client terminal based on the network request information, so as to facilitate obtaining the domain name of the client terminal through a method of parsing the preset field of the security protocol message in the digital authentication information. In this way, regardless of whether the network request information received by the server is the https network request information or the http network request information, the server may manage the traffic by obtaining the domain name requested by the client terminal, thereby effectively ensuring the normal operation of the traffic guidance mechanism or analysis in the existing technologies.

Optionally, the obtaining the digital authentication information of the client terminal based on the network request information includes: the server initiating a transmission control protocol (TCP) connection to the client terminal based on the network request information and receiving a digital authentication information sent by the client terminal after the connection is successful. In this way, a specific implementation manner for the server to acquire the digital authentication information of the client terminal based on the network request information may be provided, which increases the flexibility of embodiments of the present disclosure.

Optionally, the server initiating the TCP connection to the client terminal based on the network request information specifically includes: the server obtaining a destination Internet protocol (IP) address requested by the client terminal by parsing from the network request information and simulating a source station corresponding to the destination IP address to initiate the TCP connection to the client terminal. In this way, the server may simulate the source station to interact with the client terminal, so that the client terminal does not perceive the existence of the server, thereby achieving the purpose of "transparent proxy".

Optionally, the parsing of the preset field in the digital authentication information to obtain the domain name includes obtaining digital security protocol message in the digital authentication information, and parsing a server-name indication field in the security protocol message to obtain the domain name. In this way, a specific implementation manner for obtaining the domain name by parsing the preset field may be provided, which increases the flexibility of the embodiments of the present disclosure.

Optionally, before the server receiving the network request information of the https protocol of the client terminal, the method further includes guiding a network access request of the client terminal to the server by using the network connection device. The network connection device may include a network interface card, a router, a switch, etc. In this way, the network access request information of the client terminal may be forwarded to the server through the network connection device, and no additional configuration is required for the client terminal to implement the transparent proxy mechanism.

The website access method according to some embodiments of the present disclosure, compared to the existing technologies, regardless of whether the network request information received by the server is https network request information or http network request information, the server may obtain the domain name requested by the client terminal. The server stores one or more preset domain name. After obtaining the domain name requested by the client terminal, the server may detect whether the requested domain name if the preset domain name. If the request domain name is the preset domain name, the server may obtain the corresponding line configuration condition according to the preset domain name, so as to select a suitable back-to-source line and interact with the source station through the back-to-source line to obtain the response information corresponding the network requisition information from the source station. In this way, the server may allocate the appropriate back-to-source line to access the source station according to the domain name requested by the client terminal, which is equivalent to using the server to establish a more suitable data transmission line between the client terminal and the source station. As such, a base may be provided to alleviate the poor quality of website visits and high network latency, thereby controlling the cost of network operators in optimizing bandwidth.

Optionally, in the website access method, obtaining the line configuration condition corresponding to the preset domain name specifically includes obtaining an access hotness of the preset domain name; obtaining the hotness level of the preset domain name according to the access hotness; and obtaining the line configuration condition corresponding to the hotness level. In this way, a specific implementation manner for obtaining the line configuration condition corresponding to the preset domain name may be provided, which increases the flexibility of embodiments of the present disclosure. Moreover, using the current access hotness of the domain name as a reference for obtaining the line configuration condition, the server may set a line configuration condition that is more suitable and appropriate to the current situation of the domain name.

Optionally, in the website access method, feeding back the response information to the client terminal specifically includes modifying the source IP address of the response information to the destination IP address parsed in the network request information, so that the user does not perceive the existence of the server throughout the process, thereby achieving the purpose of "transparent proxy".

Optionally, in the website access method, the line configuration condition includes one or any combination of the following conditions: the network packet loss rate of the back-to-source line is less than a preset ratio, and the network delay of the back-to-source line is less than a preset threshold, thereby being able to select a high-quality back-to-source line or configure a line with corresponding quality according to actual needs.

### DESCRIPTION OF THE DRAWINGS

The one or more embodiments are exemplified by the accompanying drawings in the accompanying drawings. The exemplary illustrations are not intended to limit the embodiments of the present disclosure. Elements in the drawings having the same reference numerals are similar elements. The figures in the drawings do not limit the scale unless otherwise stated.
FIG. 1 is a specific flowchart of a domain-name acquisition method according to a first preferred embodiment;
FIG. 2 is a specific flowchart of a website access method according to a third embodiment; and
FIG. 3 is a schematic diagram of a server according to a fourth embodiment.

### DETAILED DESCRIPTION

To make the objects, technical solutions, and advantages of the embodiments of the present disclosure clearer, the embodiments of the present disclosure are described in detail below with reference to the accompanying drawings. However, those skilled in the art should understand that, in the various embodiments of the present disclosure, numerous technical details are set forth in order to provide the reader with a better understanding of the present disclosure. However, without these technical details, the technical solutions claimed in the present disclosure may be implemented with various changes and modifications based on the following embodiments.

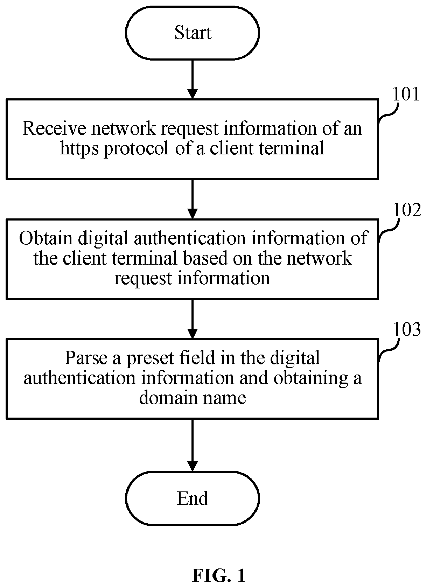

A first embodiment of the present disclosure relates to a domain-name acquisition method, of which the specific process is as shown in FIG. 1, and the steps are as follows.

In Step 101, the server receives network request information of an https protocol of a client terminal.

In the embodiment of the present disclosure, the IP address of the server may be configured in the client terminal, and the server corresponding to the IP address may be set as a proxy server, so that the network request information of the https protocol of the client terminal may be sent to the server, and the server may receive the network request information through corresponding interface.

Optionally, a routing policy may be configured in a network connection device in advance, so that when the traffic of the client terminal reaches the network connection device, the network connection device may guide the traffic to the server according to a preset routing policy. As such, there is no need of additional setup for the client terminal, which not only reduces the amount of workload, but also saves the memory space of the client terminal, thereby implementing a transparent proxy mechanism.

It should be noted that the routing policy may be set based on actual requirements. For example, the network connection device may be configured to differentiate the received traffic of the client terminal, and only the traffic that needs to be accelerated by the proxy is guided to the server, and other traffic may be forwarded according to a default path, so as to meet personalized needs of the user for Internet access. The routing policy may be set based on the source IP address, the destination IP address, or the protocol type, etc., and the network connection device includes a local network interface card, a router, or an interactive machine, etc.

In Step 102, the server obtains digital authentication information of the client terminal based on the network request information.

Specifically, the network request information may include a handshake request. The server performs a handshake check with the client terminal according to the handshake request in the network request information. If the server and the client terminal shake hands successfully, the server establishes a connection with the client terminal, so that the server may receive the digital authentication information initiated by the client terminal through the connection with the client terminal. For example, the server may initiate a TCP connection to the client terminal based on the network request information, and receive the digital authentication information, e.g., a protocol based on the secure sockets layer (SSL) or transport layer security (TLS) sent by the client terminal after the connection is successful.

In Step 103, the server parses a preset field in the digital authentication information and obtaining a domain name.

The preset field may be a server name indication (SNI) field.

More specifically, after the client terminal successfully establishes the TCP connection with the server, the client terminal may perform digital authentication information interact with the server based on the SSL or TLS protocol, where the client terminal may first send the security protocol message, i.e., a client hello packet, to the server. In the embodiment of the present disclosure, the server may obtain the domain name requested access by the client terminal by a method of receiving and parsing the SNI field in the security protocol message.

Compared with the existing technologies, in the embodiment, when receiving the network request information of the https protocol from the client terminal, the server may obtain the digital authentication information of the client terminal based on the network request information, so as to facilitate obtaining the domain name requested by the client terminal by a method of parsing the preset field of the security protocol message in the digital authentication information. In this way, regardless of whether the network request information received by the server is https network request information or http network request information, the server may manage the traffic by obtaining the domain name requested by the client terminal, thereby effectively ensuring the normal operation of the traffic guidance mechanism in the existing technologies.

A second embodiment of the present disclosure relates to a domain-name acquisition method. The second embodiment is improved on the basis of the first embodiment. The main improvement is that in the second embodiment of the present disclosure, the server may simulate the source station to interact with the client terminal, so as to achieve the purpose of "transparent proxy".

Specifically, when the server initiates the TCP connection request to the client terminal based on the network request information, the server may parse the destination IP address requested by the client terminal from the network request information, and modify the source IP address in the TCP connection request to the destination IP address, so as to achieve simulating the source station to initiate the TCP connection request to the client terminal. In this way, the client terminal may consider that the server currently interacting and establishing the connection with the client terminal is the source server, that is, the server may simulate the source station to interact with the client terminal. As such, the user does not perceive the existence of the server and achieve the purpose of "transparent proxy".

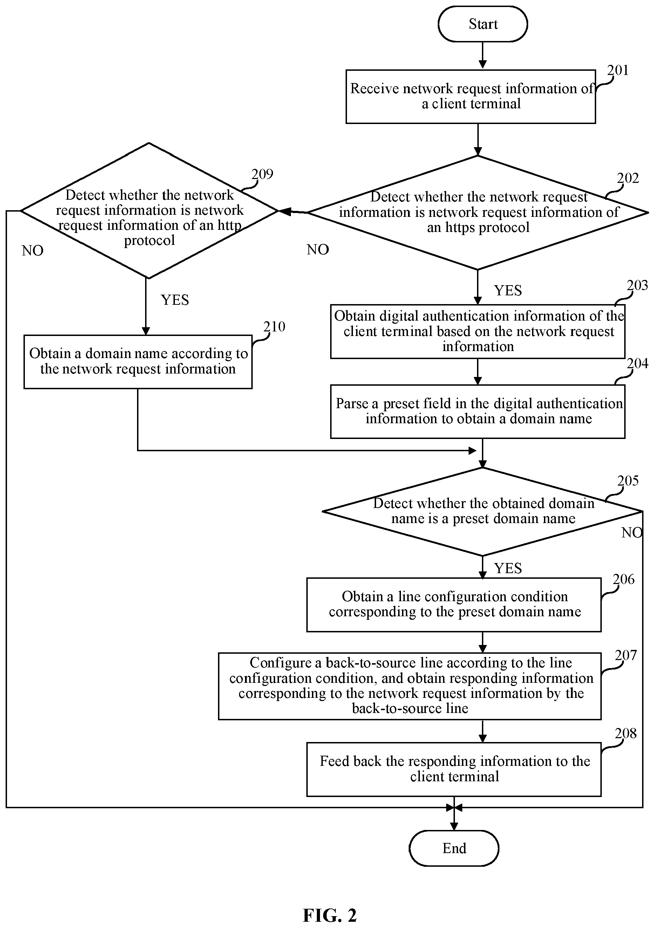

A third embodiment of the present disclosure relates to a website access method, of which a specific process is shown in FIG. 2. The website access method in this embodiment may be implemented on a server, and the steps are as follows.

In Step 201, the server receives network request information of a client terminal.

In this embodiment, the specific method for the server to receive the network request of the client terminal is substantially the same as the Step 101 in the first embodiment, and therefore is not described again. Steps 203 to 204 are substantially the same as Steps 102 to 103 in the first embodiment. To reduce repetition, details are not described herein again. Only different parts are described below.

In Step 202, the server detects whether the network request information is network request information of the https protocol.

If the network request information is the network request information of the https protocol, Steps 203 and 204 are then performed. Steps 203 and 204 are the same as Steps 102 and 103 of the first embodiment of the present disclosure, and therefore are not described again.

If the result of the determination result of the network request information is NO, then Steps 209 and 210 are performed. When the Step 210 is performed, the network request information received by the server is the http network request information is described. Since the http request is a plaintext request, the server may obtain the domain name directly from the network request information.

Through the above processing, regardless of whether the network request information sent by the client terminal is based on the https protocol or the http protocol, the server may obtain the domain name information requested by the client terminal.

In Step 205, the server detects whether the obtained domain name is a preset domain name. If yes, go to Step 206. Otherwise, the process ends.

Specifically, the server has a domain name list, in which one or more preset domain names are recorded. The server may determine whether the domain name requested by the client terminal is in the domain name list. If the domain name requested by the client terminal is in the domain name list, the determination result in Step 205 is YES. Each of the preset domain names in the domain name list may be set in advance or may be automatically generated by the server. For example, the server may record the domain name in the network request information sent by the client terminal each time, count the number of the requests for each domain name, and set the domain name with the highest number of requests as the preset domain name. For example, the server sets the domain name whose number of requests is ranked in the top N as the preset domain name, or sets the domain name whose number of requests is greater than the preset number of times as the preset domain name. N is a positive integer, and the value of N may be preset by a user or a technician. For example, N may be 5, and the preset number may also be preset by a technician.

It should be noted that, if the determination result of Step 205 is NO, that is the domain name is not the preset domain name, the server may guide or discard the domain name according to a certain rule, thereby providing a proxy service for the user to access the network. That is, when the determination result of Step 205 is NO, the steps performed by the server are not limited in the present embodiment.

In Step 206, the server obtains a line configuration condition corresponding to the preset domain name.

Specifically, the domain name list may further include a correspondence relationship between the preset domain name and the line configuration condition. The server may obtain the line configuration condition corresponding to the preset domain name by querying the domain name list. The line configuration condition may include one or a combination of the following conditions: the network packet loss rate of the back-to-source line is less than a preset ratio, and the network delay of the back-to-source line is less than a preset threshold. In this way, the server may select the back-to-source line with better network quality, low network delay, and good network stability. The preset threshold and the preset ratio may be preset by a technician and stored in the server.

It should be noted that the above-mentioned example of the line configuration condition is only exemplified. In the embodiment, the specific configuration of the line configuration condition is not limited. In an actual application, the line configuration condition may be set according to actual requirements.

More specifically, the server may also set the line configuration condition according to the counted number of times the client requests the domain name. For example, the server may set the line configuration condition corresponding to the domain name with the highest number of requests as that the network delay is less than the preset threshold, and the network packet loss rate is less than the preset ratio, so as to ensure low network delay and good network stability, and provide the user with high-quality network services. For example, the server may set the line configuration condition corresponding to the domain name with the lowest number of requests as that the network delay is less than the preset threshold, so as to ensure low network delay and provide the user with basic network services. In this way, the server may provide network services that better meet the demand of the user according to the usage habits of the user, and the user experience is better.

In this embodiment, the server obtains the access hotness of the preset domain name, so as to obtain the hotness level of the preset domain name according to the access hotness, thereby obtaining the line configuration condition corresponding to the hotness level.

Specifically, the server may set the line configuration condition corresponding to the highest hotness level as that the network delay is less than the preset threshold, and the network packet loss rate is less than the preset ratio, thereby ensuring low network delay and good network stability, and providing the user with high-quality network server. For example, the server may set the line configuration condition of the lowest hotness level as that the network delay is less than the preset threshold, thereby ensuring low network delay and providing the user with relatively basic network services.

More specifically, when the server obtains the hotness level of the preset domain name according to the access hotness, the server may obtain a hotness interval in which the access hotness is located, thereby obtaining the hotness level corresponding to the hotness interval. The access hotness may be obtained according to the search volume, the click volume or the access volume of the website corresponding to the preset domain name, and the access hotness may be the instant access hotness of the domain name. In this way, the server uses the current access hotness of the domain name as a reference for obtaining the line configuration condition and may set a line configuration condition that is more suitable and appropriate to the current situation of the domain name. In actual operation, the access hotness may also be an average access hotness of the domain name in a certain period of time. The preset embodiment does not limit the implementation manner of the access hotness.

In Step 207, the server configures a back-to-source line according to the line configuration condition, and obtains response information corresponding to the network request information through the back-to-source line.

Specifically, the server selects a back-to-source line that meets the line configuration conditions according to the line configuration conditions. Moreover, when the qualified back-to-source line obtained by the server according to the line configuration condition is greater than 1, the server may randomly select one of the back-to-source lines. When the qualified back-to-source line obtained by the server according to the line configuration condition is less than 1, the server may obtain the best quality back-to-source line currently in an idle state.

In this embodiment, the server may parse and obtain the destination IP address requested by the client terminal from the network request information, and access the destination IP address through the selected back-to-source line to establish a connection with the source station. Moreover, the server may send the network request information sent by the client terminal to the source station, so as to receive the response information fed back by the source station.

In Step 208, the server feeds back the response information to the client terminal.

Specifically, the server feeds back the response information to the client terminal through a connection of the TCP protocol established with the client terminal. In this embodiment, when the server feeds back the response information to the client terminal, the source IP address of the response information is modified to the destination IP address requested by the client terminal, so that the user does not perceive the existence of the server, thereby realizing the purpose of the "transparent proxy".

It is worth mentioning that after the server feeds back the response information to the client terminal, it may also be determined whether the client terminal requests the source station within a preset time period. If the server determines that the client terminal does not receive the request information for the source station within the preset time period, the server may determine that the data transmission is temporarily not performed between the client terminal and the source station. At this point, the server is disconnected from the source station. The preset time period may be preset by the technology developer and stored in the server. In this way, it is possible to prevent internal resources of the server from being occupied by unnecessary network links for a long time.

Compared with the existing technologies, the server may obtain the domain name requested by the client terminal, regardless of whether the network request information received by the server is https network request information or http network request information. Moreover, the server may store one or more preset domain names. After obtaining the domain name requested by the client terminal, the server may detect whether the requested domain name is a preset domain name. If the requested domain name is a preset domain name, the server may obtain a line configuration condition corresponding to the preset domain name to select a more suitable back-to-source line, and interact with the source station through the back-to-source line, so as to obtain response information corresponding to the network request information from the source station. In this way, the server may allocate the appropriate back-to-source line to access the source station according to the domain name requested by the client terminal, which is equivalent to using the server to establish a more suitable data transmission line between the client terminal and the source station. As such, not only a basis may be provided to alleviate the problem of poor website access quality and high network delay, and but also the cost of network operators in optimizing bandwidth may be controlled, thereby achieving accurate identification and grooming of client website access traffic.

The steps of the above various methods are divided for the sake of clear description. For implementation, certain steps may be combined into one step or split into multiple steps, which is within the protection scope of this patent application as long as the same logical relationship is included. Designs with addition of insignificant modifications to an algorithm or process, or introduction of an insignificant without changing the core design of the algorithms and processes are with the protection scope of this patent.

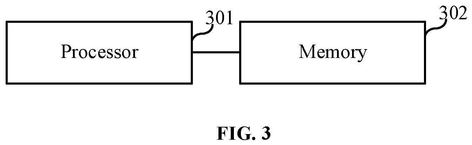

A fourth embodiment of the present disclosure relates to a server, as shown in FIG. 3, which includes at least one processor 301; and a memory 302 communicably coupled to the at least one processor 301. The memory 302 may store instructions that may be executed by the at least one processor 301. The instructions are executed by the at least one processor 301 to enable the at least one processor 301 to perform the domain-name acquisition method in the above method embodiments.

The memory 302 and the processor 301 are connected in a bus manner, and the bus may include any number of interconnected buses and bridges. The bus may connect the various circuits of the one or more processors 301 and the memory 302. The bus may also connect various other circuits, such as peripherals, voltage regulators, and power management circuits, which is well known in the art, and therefore, is not further described herein. The bus interface provides an interface between the bus and the transceiver. The transceiver may be an element or a plurality of elements, such as multiple receivers and transmitters, providing elements for communicating with various other devices on a transmission medium. The data processed by the processor 301 may be transmitted over a wireless medium via an antenna. Further, the antenna may also receive the data and transmit the data to the processor 301.

The processor 301 is responsible for managing the bus and normal processing, and may also provide various functions including timing, peripheral interfaces, voltage regulation, power management, and other control functions. The memory 302 may be used to store data used by the processor 301 in performing operations.

Compared with the existing technologies, the server may obtain the domain name requested by the https packet and ensure the normal operation of the traffic guidance mechanism in the existing technologies.

A fifth embodiment of the present disclosure relates to a computer readable storage medium storing a computer program. The domain-name acquisition method in the above method embodiments may be implemented when the computer program is executed by the processor.

Compared with the existing technologies, the server according to the embodiments of the present disclosure may obtain the domain name requested by the https packet and ensure the normal operation of the traffic guidance mechanism of the existing technologies.

That is, those skilled in the art may understand that all or part of the steps in implementing the above embodiments may be completed by a program instructing related hardware. The program is stored in a storage medium and includes a plurality of instructions for making a device (e.g., a microcontroller, a chip, etc.) or a processor to perform all or part of the steps of the methods described in the various embodiments of the present application. The foregoing storage medium that may store the program codes includes: a U disk, a mobile hard disk, a read-only memory (ROM), a random-access memory (RAM), a magnetic disk, or an optical disk, etc.

A person skilled in the art may understand that the above embodiments are specific embodiments for implementing the present disclosure, and various changes may be made in the form and details without departing from the spirit and scope of the present disclosure.

## Claims

1. A domain-name acquisition method, comprising:
receiving, by a server, network request information of an https protocol of a client terminal;
obtaining digital authentication information of the client terminal based on the network request information; and
parsing a preset field in the digital authentication information and obtaining a domain name.

2. The domain-name acquisition method according to claim 1, wherein obtaining the digital authentication information of the client terminal based on the network request information comprises:
initiating, by the server, a transmission control protocol (TCP) connection to the client terminal based on the network request information, and receiving the digital authentication information sent by the client terminal after the TCP connection is successful.

3. The domain-name acquisition method according to claim 2, wherein the server initiates the TCP connection to the client terminal based on the network request information comprises:
parsing, by the server, a destination IP address requested by the client terminal from the network request information, simulating a source station corresponding to the destination IP address, and initiating the TCP connection to the client terminal.

4. The domain-name acquisition method according to claim 1, wherein parsing the preset field in the digital authentication information and obtaining the domain name comprise:
obtaining a security protocol message in the digital authentication information; and
parsing a server name indication field in the security protocol message and obtaining the domain name.

5. The domain-name acquisition method according to claim 1, wherein before the server receiving the network request information of the https protocol of the client terminal, the method further includes:
guiding, by the server, the network request information of the client terminal to the server by a network connection device.

6. A website access method, applied to a server, the method comprising:
receiving network request information of a client terminal;
detecting whether the network request information is network request information of an https protocol;
obtaining, if the network request information is the network request information of the https protocol, a domain name requested by the client terminal by using the domain-name acquisition method according to any one of claims 1 to 5;
obtaining, if the domain name requested by the client terminal is a preset domain name, a line configuration condition corresponding to the preset domain name;
configuring a back-to-source line according to the line configuration condition, and obtaining response information corresponding to the network request information through the back-to-source line; and
feeding back response information to the client terminal.

7. The website access method according to claim 6, wherein obtaining the line configuration condition corresponding to the preset domain name comprises:
obtaining an access hotness of the preset domain name;
obtaining a hotness level of the preset domain name according to the access hotness; and
obtaining the line configuration condition corresponding to the hotness level.

8. The website access method according to claim 6, wherein feeding back the response information to the client terminal comprises:
modifying the source IP address of the response information as a destination IP address parsed in the network request information.

9. The website access method according to claim 6, wherein the line configuration condition comprises one or a combination of following conditions:
a network packet loss rate of the source line being less than a preset ratio, and a network delay of the back-to-source line being less than a preset threshold.

10. A server, comprising:
at least one processor; and,
a memory communicatively coupled to the at least one processor, wherein:
the memory stores instructions executable by the at least one processor, the instructions being executed by the at least one processor to enable the at least one processor to implement the domain-name acquisition method according to any one of claims 1 to 5.

11. A computer readable storage medium storing a computer program, wherein the computer program is executed by a processor to implement the domain-name acquisition method according to any one of claims 1 to 5.
